Europäisches Patentamt

European Patent Office

Office européen des brevets

(19)

(11) **EP 1 212 225 B1**

(12) **EUROPÄISCHE PATENTSCHRIFT**

(45) Veröffentlichungstag und Bekanntmachung des
Hinweises auf die Patenterteilung:
**08.06.2005 Patentblatt 2005/23**

(21) Anmeldenummer: **00958437.6**

(22) Anmeldetag: **11.08.2000**

(51) Int Cl.⁷: **B60T 8/48**, B60T 7/12,
B60K 31/08

(86) Internationale Anmeldenummer:
**PCT/EP2000/007863**

(87) Internationale Veröffentlichungsnummer:
**WO 2001/014194 (01.03.2001 Gazette 2001/09)**

(54) **VERFAHREN ZUR REGELUNG EINER BREMSANLAGE FÜR KRAFTFAHRZEUGE**

METHOD FOR ADJUSTING A BRAKE SYSTEM OF A VEHICLE

PROCEDE POUR REGULER UN SYSTEME DE FREINAGE POUR VEHICULES AUTOMOBILES

(84) Benannte Vertragsstaaten:
**DE FR GB**

(30) Priorität: **24.08.1999 DE 19939874
27.03.2000 DE 10015224**

(43) Veröffentlichungstag der Anmeldung:
**12.06.2002 Patentblatt 2002/24**

(73) Patentinhaber: **Continental Teves AG & Co. OHG
60488 Frankfurt am Main (DE)**

(72) Erfinder:
• **ECKERT, Alfred
D-55129 Mainz-Hechtsheim (DE)**
• **NEUMANN, Ulrich
D-64380 Rossdorf (DE)**
• **BERTHOLD, Thomas
D-64293 Darmstadt (DE)**
• **KLEIN, Andreas
D-61352 Bad Homburg (DE)**
• **PFEIFFER, Jürgen
D-61479 Glashütten (DE)**
• **ALBRICH VON ALBRICHSFELD, Christian
D-64283 Darmstadt (DE)**

(56) Entgegenhaltungen:
**EP-A- 0 867 325          EP-A- 0 867 349**

**Beschreibung**

Die Erfindung betrifft ein Verfahren zur Regelung einer Bremsanlage für Kraftfahrzeuge mit einer Fahrzeuggeschwindigkeitsregeleinheit, durch die eine vorgegebene Fahrzeuggeschwindigkeit mittels eines automatischen Eingriffs in die Bremsregelung einstellbar ist, wobei bei einer Bremsanforderung der Fahrzeuggeschwindigkeitsregeleinheit und gleichzeitig einer Bremsanforderung des Fahrers die Funktion der Fahrzeuggeschwindigkeitsregeleinheit deaktiviert wird.

Bremsenregelungsanlagen mit einer Fahrzeuggeschwindigkeitsregeleinheit, die eine vorgegebene Fahrzeuggeschwindigkeit mittels eines automatischen Bremseingriffs einstellt, sind bekannt. Durch eine Betätigung des Bremspedals durch den Fahrer geht die Fahrzeuggeschwindigkeitsregeleinheit vom eingeschalteten in den ausgeschalteten Zustand über, wodurch ein durch die Fahrzeuggeschwindigkeitsregeleinheit vorgenommener automatische Bremseingriff beendet wird. Der durch den automatischen Bremseingriff zuletzt in den Radbremsen vorherrschende Druck wird abgebaut, bis aufgrund einer Betätigung des Bremspedals der in den Radbremsen eingesteuerte, resultierende Bremsdruck wieder ansteigt. Dies führt zu einem Ruck in der Fahrzeugverzögerung.

In der EP 0 867 349 ist ein Verfahren beschrieben, mit welchem dieser Einbruch der Fahrzeugverzögerung verhindert werden soll. Es wird vorgeschlagen, daß nach dem Ausschalten der Fahrzeuggeschwindigkeitsregeleinheit bei Beginn der Betätigung des Bremspedals der durch die Fahrzeuggeschwindigkeitsregeleinheit zuletzt eingestellte Ist-Druck beibehalten wird oder kontinuierlich einem vom Fahrer angeforderten, höheren Soll-Druck angeglichen wird oder ein Gesamtdruck eingestellt wird, welcher der Summe des Ist-Drucks und des Soll-Drucks enspricht. Der durch die Fahrzeuggeschwindigkeitsregeleinheit vorgegebene Bremsdruck wird bei der Betätigung des Bremspedals nicht abgebaut, sondern gehalten oder erhöht, mit dem Ziel, ruckfreie Übergänge von einem eingeschalteten Zustand in einen ausgeschalteten Zustand der Fahrzeuggeschwindigkeitsregeleinheit zu schaffen.

Bei einer Bremsanlage mit einem aktiven, elektrisch angesteuerten Bremskraftverstarker, wird bei einem automatischen Bremseingriff der Fahrzeuggeschwindigkeitsregeleinheit das Bremspedal mitbewegt. Will der Fahrer starker bremsen oder die Fahrzeuggeschwindigkeitsregeleinheit abschalten, so betätigt er das Bremspedal an der Stelle und mit der Kraft, die dem Bremsdruck in der Radbremse entspricht. Bei einer sog. "Brake-by-wire-Bremsanlage", bei der die Übertragung des Fahrerbremswunsches von dem Bremspedal zu den hydraulischen Aktuatoren im Fall einer elektrohydraulischen Bremse (EHB) oder zu den elektromechanischen Aktuatoren bei einer elektromechanischen Bremse (EMB) elektrisch erfolgt, verbleibt das Bremspedal in der Ruheposition. Die Übernahme während eines durch die Fahrzeuggeschwindigkeitsregeleinheit eingeleiteten Bremsvorgangs auf den Fahrer ist insbesondere bei einer Brake-by-wire-Bremsanlage für den Fahrer nicht transparent.

Aufgabe der Erfindung ist es, das Verfahren nach dem Stand der Technik zu verbessern und insbesondere für eine Brake-by-wire-Bremsanlage die Übernahme der Kontrolle des Bremsvorgangs von einem automatischen Bremseingriff der Fahrzeuggeschwindigkeitsregeleinheit auf eine fahrerbestimmte Bremsbetätigung komfortabel und zugleich transparent zu gestalten.

Die Aufgabe wird erfindungsgmäß gelöst durch die Merkmale der unabhängigen Patentansprüche.

Besonders vorteilhafte Weiterbildungen und Ausgestaltungen der Erfindung sind in den abhängigen Unteransprüchen angegeben.

Wesentlich an der Erfindung ist es, daß nachdem bei einer Bremsanforderung der Fahrzeuggeschwindigkeitsregeleinheit und gleichzeitig einer Bremsanforderung des Fahrers die Funktion der Fahrzeuggeschwindigkeitsregeleinheit deaktiviert wird, der auf Grund der Bremsanforderung der Fahrzeuggeschwindigkeitsregeleinheit in der Radbremse eingesteuerte Druck ($P_A$) bei der Bremsanforderung des Fahrers reduziert wird nach einer vorgegebenen Funktion ($P_X$).

Durch die Rücknahme des auf Grund der Bremsanforderung der Fahrzeuggeschwindigkeitsregeleinheit in der Radbremse eingesteuerten Drucks ($P_A$) kann der Fahrer erkennen, wann die Betätigung des Bremspedals zu einem fahrergesteuerten Bremseingriff führt. Die Reduktion erfolgt dabei nach einer vorgegebenen Funktion, die so gewählt wird, daß die Bremsbetätigung für den Fahrer komfortabel und zugleich transparent ist und gleichzeitig eine möglichst hohe Verzögerung in einer Notfallsituation (Notbremsung) sichergestellt ist.

Es ist nach der Erfindung vorgesehen, daß als Funktion eine zumindest annähernd lineare Rampenfunktion vorgegeben wird.

Erfindungsgemäß weist die vorgegebene Funktion eine mittlere (negative) Steigung ($m_{PX}$) von (20 bar / 5 sec.) bis (30 bar / 0,5 sec.), vorzugsweise von (20 bar / 2 sec.) bis (30 bar / 1 sec.), auf.

Die Funktion wird erfindungsgemäß nach Maßgabe der Bremsanforderung des Fahrers verändert.

Erfindungsgemäß wird bei einer Anforderung des Fahrers für ein schnelles Abbremsen des Fahrzeugs eine Funktion vorgegeben, durch welche der auf Grund der Bremsanforderung der Fahrzeuggeschwindigkeitsregeleinheit in der Radbremse eingesteuerte Druck ($P_A$) schnell reduziert wird und bei einer Anforderung des Fahrers für ein langsames Abbremsen des Fahrzeugs wird eine Funktion vorgegeben, durch welche der auf Grund der Bremsanforderung der Fahrzeug-

geschwindigkeitsregeleinheit in der Radbremse einge-steuerte Druck ($P_A$) langsam reduziert wird.

Es ist nach der Erfindung vorgesehen, daß aus der Bremsanforderung des Fahrers eine mittlere (positive) Steigung ($m_{PF}$) des Bremsdrucks ermittelt wird und daraus die mittlere (negative) Steigung($m_{PX}$) der vorgebenen Funktion durch die Formel $m_{PX} = -m_{PF}$ * Konstante K bestimmt wird, bis zu einem oberen Grenzwert von (100 bar / sec). Daß bedeutet, es wird eine größte mittlere (negative) Steigung ($m_{PX}$) und damit eine maximale Druckabbau-Gschwindigkeit von (100 bar / sec) vorgegeben. Die Konstante K hat vorzugsweise einen Wert in einem Bereich von 1 bis 2, besonders bevorzugt einen Wert von 1,5.

Da der Bremsdruckabbau nach Abschalten der Fahrzeuggeschwindigkeitsregeleinheit in jedem Fall relativ rasch erfolgen soll, ist es vorgesehen, daß der Wert für mittlere (negative) Steigung ($m_{PX}$) der vorgegebenen Funktion einen minimalen Grenzwert (geringste Druckabbau-Gschwindigkeit) in einem Bereich von (20 bar / 5 sec.) bis (20 bar / 2 sec.), vorzugsweise (20 bar / 3 sec.), nicht unterschreitet.

Es ist erfindungsgemäß vorgesehen, daß ein resultierender Bremsdruck ($P_{res}$) in der Radbremse des Fahrzeugs nach Maßgabe des auf Grund der Bremsanforderung des Fahrers in der Radbremse eingesteuerten Drucks ($P_F$) und des durch die vorgegebene Funktion in der Radbremse eingesteuerten Drucks ($P_X$) eingestellt wird.

Es ist nach einer Ausführungsform der Erfindung vorgesehen, daß ein resultierender Bremsdruck ($P_{res}$) in der Radbremse des Fahrzeugs eingestellt wird, welcher der Summe aus einem auf Grund der Bremsanforderung des Fahrers in der Radbremse eingesteuerten Druck($P_F$) und dem durch die vorgegebene Funktion in der Radbremse eingesteuerten Druck ($P_X$) entspricht.

Nach einer anderen Ausführungsform der Erfindung wird ein resultierender Bremsdruck ($P_{res}$) in der Radbremse des Fahrzeugs eingestellt, welcher dem größeren der beiden auf Grund der Bremsanforderung des Fahrers in der Radbremse eingesteuerten Druck ($P_F$) und durch die vorgegebene Funktion in der Radbremse eingesteuerten Druck ($P_X$) entspricht.

Es ist erfindungsgemäß nach einer weiteren Ausführungsform vorgesehen, daß ein resultierender Bremsdruck ($P_{res}$) in der Radbremse des Fahrzeugs eingestellt wird, der einem Wert entspricht, der geringer ist als die Summe aus dem auf Grund der Bremsanforderung des Fahrers in der Radbremse eingesteuerten Druck ($P_F$) und dem durch die vorgegebene Funktion in der Radbremse eingesteuerten Druck ($P_X$) und der größer ist als der größere der beiden auf Grund der Bremsanforderung des Fahrers in der Radbremse eingesteuerten Druck ($P_F$) und durch die vorgegebene Funktion in der Radbremse eingesteuerten Druck ($P_X$).

Die letztere Ausführungsform der Erfindung ist besonders bevorzugt, denn damit ist die Bremsdruckübernahme durch den Fahrer besonders komfortabel und dabei transparent. Dabei hat es sich erfindungsgemäß als besonders vorteilhaft herausgestellt, einen resultierenden Bremsdruck ($P_{res}$) in der Radbremse des Fahrzeugs einzustellen, der einem Wert entspricht, welcher durch die Formel $P_{res} = P_F + P_X - (P_F * P_X / \text{Konstante Z})$ ermittelt wird.

Erfindungsgemäß hat die Konstante Z (Einstellfaktor) einen Wert in einem Bereich von 20 bar bis 100 bar, vorzugsweise 30 bar bis 70 bar.

Es ist im Sinne der Erfindung vorgesehen, daß der Bremsdruck in der Radbremse durch Fremdenergie, insbesondere durch einen hydraulischen Speicher und ein Motor-Pumpen-Aggregat, erzeugt wird. Vorzugsweise wird dabei die Bremsdruckanforderung des Fahrers mit Hilfe eines Pedalwegsimulators und zugeordneten Sensoren erfaßt und elektronisch einer Bremsregeleinheit übermittelt (Brake-by-Wire-Bremsanlage).

Die Aufgabe wird ferner durch eine Vorrichtung zur Regelung einer Bremsanlage für Kraftfahrzeuge mit einer Fahrzeuggeschwindigkeitsregeleinheit gelöst, die Mittel aufweist, um eine vorgegebene Fahrzeuggeschwindigkeit mittels eines automatischen Eingriffs in die Bremsregelung einzustellen und die Mittel aufweist, um bei einer Bremsanforderung der Fahrzeuggeschwindigkeitsregeleinheit und gleichzeitig einer Bremsanforderung des Fahrers die Funktion der Fahrzeuggeschwindigkeitsregeleinheit zu deaktivieren, die dadurch gekennzeichnet ist, daß diese Vorrichtung Mittel aufweist, um den auf Grund der Bremsanforderung der Fahrzeuggeschwindigkeitsregeleinheit in der Radbremse eingesteuerten Druck ($P_X$) bei der Bremsanforderung des Fahrers nach einer vorgegebenen Funktion zu reduzieren und daß diese Mittel aufweist, um insbesondere einen resultierenden, durch die Formel $P_{res} = P_F + P_X - (P_F * P_X / \text{Konstante Z})$ ermittelten Bremsdruck ($P_{res}$) in der Radbremse des Fahrzeugs einzustellen.

Vorzugsweise weist eine fremdkraftbetätigte, vorzugsweise elektronisch regelbare Fahrzeugbremse, insbesondere Brakeby-wire-Fahrzeugbremse die erfindungsgemäße Vorrichtung zur Regelung der Fahrzeugbremsanlage auf.

Das erfindungsgemäße Verfahren und die erfindungsgemäße Vorrichtung soll nun anhand von Abbildungen (Fig. 1 bis Fig. 4) beispielhaft näher erläutert werden.

Es zeigt:

Fig. 1 die zeitliche Abhängigkeit des durch die Fahrzeuggeschwindigkeitsregeleinheit in der Radbremse eingesteuerten Drucks ($P_A$), des durch die vorgegebene Funktion in der Radbremse eingesteuerten Drucks ($P_X$), des auf Grund der Bremsanforderung des Fahrers in der Radbremse eingesteuerten Drucks ($P_F$) und des nach der Formel $P_{res} = P_F + P_X - (P_F * P_X / \text{Konstante Z})$ berechneten

resultierenden Bremsdrucks ($P_{res}$) für einen vorgegebenen Druck $P_X$ von 20 bar und einen Enddruck $P_F$ von ebenfalls 20 bar,

Fig. 2 analog zur Fig. 1 die zeitliche Abhängigkeit von $P_A$, $P_X$, $P_F$ und $P_{res}$, wobei $P_{res}$ nach derselben Formel berechnet wurde, der Ausgangsdruck $P_A$ ebenfalls 20 bar beträgt, aber der Enddruck $P_F$ 30 bar ist,

Fig. 3 die zeitliche Abhängigkeit von $P_A$, $P_X$, $P_F$ und $P_{res}$ in Analogie zur Fig. 1 und 2, wobei $P_{res}$ nach derselben Formel berechnet und als Druck $P_A$ ebenfalls 20 bar vorgegeben wurde, aber wobei ein geringerer Enddruck $P_F$ von 5 bar vorliegt,

Fig. 4 schematisch mögliche Komponenten erfindungsgemäßen Vorrichtung.

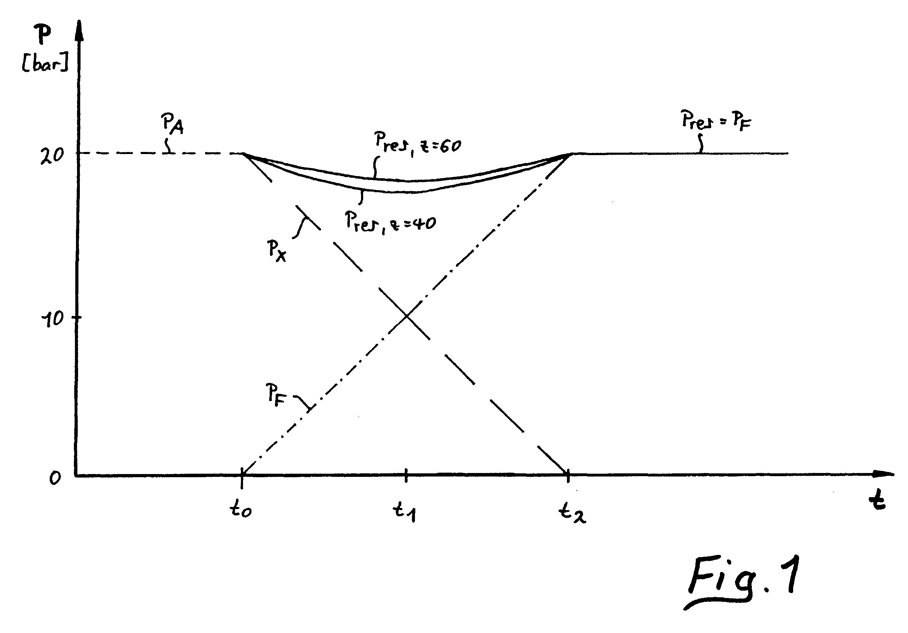

In der Fig. 1 ist der Druckverlauf des durch die Fahrzeuggeschwindigkeitsregeleinheit in der Radbremse eingesteuerten Drucks ($P_A$) (kurzgestrichelte Linie), des durch die vorgegebene Funktion in der Radbremse eingesteuerten Drucks ($P_X$) (langgestrichelte Linie), des auf Grund der Bremsanforderung des Fahrers in der Radbremse eingesteuerten Drucks ($P_F$) (gestrichpunktete Linie) und des resultierender Bremsdruck ($P_{res}$) (durchgezogene Linien) über der Zeit (t) dargestellt. Der in der Radbremse des Fahrzeugs eingestellte Druck $P_{res}$ wurde nach der Formel $P_{res} = P_F + P_X - (P_F * P_X / \text{Konstante } Z)$ ermittelt. Als Konstante Z wurde ein Wert von Z = 60 (siehe obere, durchgezogene Linie $P_{res,Z=60}$) und von Z = 40 (siehe untere, durchgezogene Linie $P_{res,Z=40}$) vorgegeben.

Bis zum Zeitpunkt $t_0$ entspricht der Bremsdruck P dem durch die Fahrzeuggeschwindigkeitsregeleinheit in der Radbremse eingesteuerten Druck ($P_A$) (kurzgestrichelte Linie), da ein Bremswunsch des Fahrers nicht vorliegt.

Beim Zeitpunkt $t_0$ ist ein Bremswunsch des Fahrers erkannt. .Die Fahrzeuggeschwindigkeitsregeleinheit wird deaktiviert und die aktuelle Bremsanforderung der Fahrzeuggeschwindigkeitsregeleinheit ($P_A$) wird gespeichert bzw. zwischengespeichert. Der Bremswunsch kann beispielsweise bei einer fremdenergiegesteuerten Bremsanlage durch eine Berührung des Bremspedals bzw. bei einer Betätigung des Bremspedals über einen vorbestimmten Weg oder mit einer vorbestimmten Kraft erkannt werden.

Ab dem Zeitpunkt $t_0$ wird ausgehend von dem gespeicherten Wert der Bremsanforderung der Fahrzeuggeschwindigkeitsregeleinheit dieser Bremsdruck ($P_A$) nach einer zumindest annähernd linearen Rampenfunktion reduziert bis auf den Wert null (Linie $P_X$). Der aktuelle Wert von $P_X$ und aktuelle Wert der Bremsanforderung durch den Fahrer ($P_F$) wird als Regelgröße zur Einstellung des resultierenden Bremsdruck genutzt. Der resultierende Bremsdruck ($P_{res}$) wird nach der Formel $P_{res} = P_F + P_X - (P_F * P_X / \text{Konstante } Z)$ eingestellt. Der nach dieser Formel berechnete Bremsdruck $P_{res}$ ist in der Fig. 1 für einen Wert von Z = 60 (obere, durchgezogene Linie $P_{res,Z=60}$) und von Z = 40 (untere, durchgezogene Linie $P_{res,Z=40}$) dargestellt.

Wie in der Fig. 1 zu erkennen, wird durch die erfindungsgemäße Funktion zur Regelung des resultierenden Bremsdrucks ($P_{res}$) und für die gegebenen Randbedingungen nach dem Zeitpunkt $t_0$ der Bremsdruck $P_{res}$ zuerst relativ langsam vermindert bis auf einen bestimmten Wert, anschließend zum Zeitpunkt $t_1$, wenn $P_F + P_X$ in etwa einen gleichen Wert annehmen, wieder relativ langsam erhöht und schließlich zum Zeitpunkt $t_2$ dem Wert von $P_F$ angeglichen. Durch die erfindungsgemäße Regelung spürt der Fahrer durch die Abnahme des Bremsdrucks ab $t_0$ einerseits das Ausschalten der Fahrzeuggeschwindigkeitsregeleinheit. Andererseits spürt der Fahrer den anschließenden Anstieg des Bremsdrucks ab $t_1$, der die Übernahme des Bremseneingriffs entsprechend seiner Bremspedalbetätigung anzeigt. Ab dem Zeitpunkt $t_2$ wird der Bremsdruck ausschließlich durch den Fahrer bestimmt, da $P_X$ den Wert null angenommen hat und gemäß obiger Gleichung die Regelung dann nur nach Maßgabe des Fahrerwunsches erfolgt. Hier ist für den Fahrer wieder das "gewohnte" Pedalgefühl erreicht, bei dem eine bestimmte Pedalstellung bzw. eine bestimmte Pedalrückstellkraft einen bestimmten Bremsdruck bzw. eine bestimmte Fahrzeugverzögerung -unter den gegebenen Randbedingungen, wie zum Beispiel Radschlupfbedingungen- bewirkt.

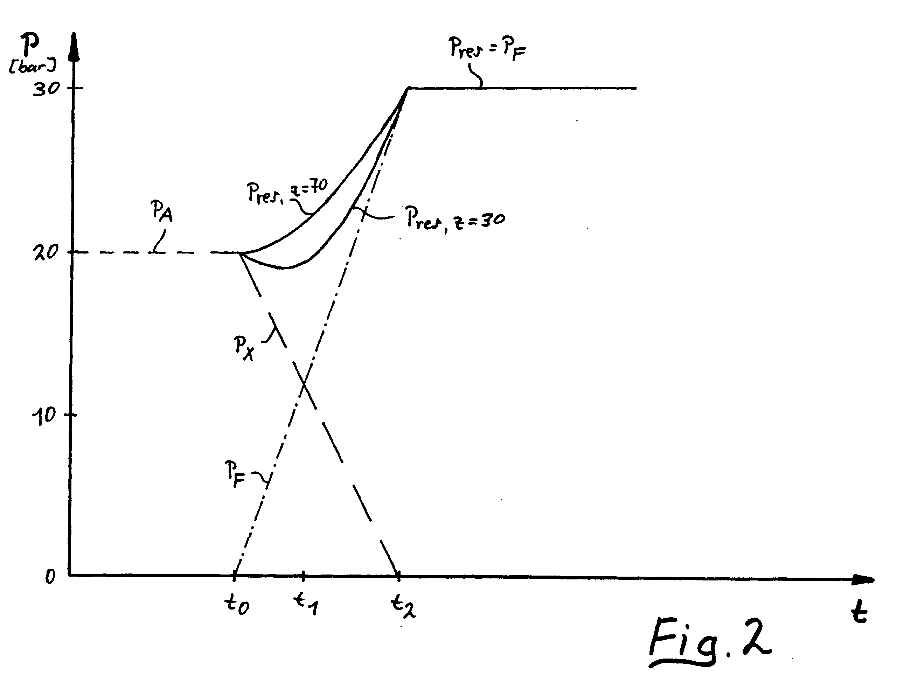

Bei dem in der Fig. 2 dargestelltem Verlauf von $P_A$, $P_X$, $P_F$ und $P_{res}$ wurde von einer Situation ausgegangen, bei der der Fahrer eine rasche Verzögerung des Fahrzeugs wünscht. Die lineare Rampenfunktion fällt nach Maßgabe des relativ steilen Anstiegs des fahrervorgegebenen Bremsdrucks ($P_F$) ebenfalls mit einer relativ großen (negativen) Steigung, daß bedeutet relativ schnell, ab. Dadurch nähert sich der resultierende Bremsdruck $P_{res}$ der Fahrervorgabe $P_F$ relativ schnell, wobei spatestens ab dem Zeitpunkt $t_1$ die Bremsdruckübernahme fur den Fahrer spurbar ist. Dies ist für einen Wert von Z = 70 (obere, durchgezogene Linie $P_{res,Z=70}$) und von Z = 30 (untere, durchgezogene Linie $P_{res,Z=30}$) in Fig. 2 dargestellt.

Es erfolgt eine Anpassung der Rampenfunktion für $P_X$ an die Fahrervorgabe, die insbesondere durch die Antrittsgeschwindigkeit des Fahrers in das Bremspedal charakterisiert ist, in dem Sinne, daß bei einem schnelleren Antreten die Rampe für $P_X$ schneller abfällt, wodurch der Fahrer schneller den resultierenden Bremsdruck $P_{res}$ direkt bestimmt. Dies zeigt auch ein Vergleich des Verlaufs der Druckkurven $P_X$, $P_F$ und $P_{res}$ in der Fig. 1 (langsameres Antreten des Fahrers) und der Fig. 2 (schnelleres Antreten des Fahrers) deutlich.

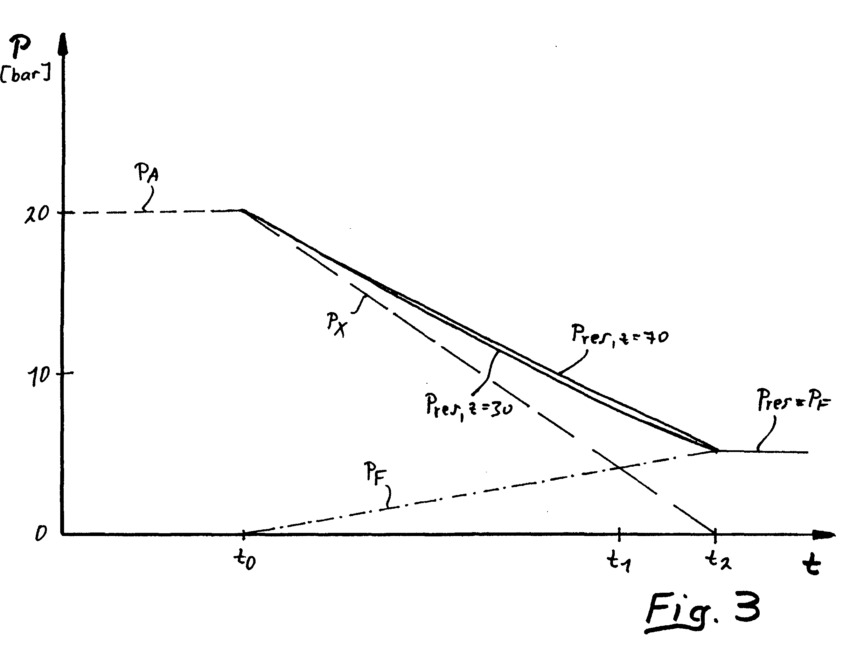

In der Fig. 3 ist der Verlauf von $P_A$, $P_X$, $P_F$ und $P_{res}$ für eine zu der in Fig. 2 dargestellten konträren Situation gezeigt. Denn hier ist die Antrittsgeschwindigkeit des Fahrers relativ gering und der maximal vom Fahrer gewünschte Bremsdruck relativ klein. Entsprechend dem Fahrerwunsch wird zunächst ab $t_0$ die Geschwindigkeitsregeleinrichtung abgeschaltet. Dann erfolgt eine Abnahme von $P_X$ nach einer vorgegebenen Rampenfunktion. Der gemäß der genannten Formel ermittelte, einzustellende resultierenden Bremsdruck $P_{res}$ fällt hier relativ rasch ab, so daß schließlich zum Zeitpunkt $t_2$, bei dem Px den Wert Null annimmt, der resultierende Bremsdruck $P_{res}$ ausschließlich durch den fahrerbestimmten Bremsdruck $P_F$ definiert wird. Dies ist für einen Wert von Z = 70 (obere, durchgezogene Linie $P_{res,Z=70}$) und von Z = 30 (untere, durchgezogene Linie $P_{res,Z=30}$) in Fig. 3 dargestellt. Auch hier ist zunächst das Abschalten der Geschwindigkeitsregeleinrichtung zum Zeitpunkt $t_0$ für den Fahrer aufgrund der Verringerung des Drucks an den Radbremsen (Linien $P_{res}$) spürbar. Ebenso ist der Übergang zur ausschließlich fahrerbestimmten Bremsdruckeinsteuerung ab dem Zeitpunkt $t_2$ für den Fahrer transparent, da sich ab diesem Zeitpunkt das für ihn "gewohnte" Pedalgefühl einstellt.

Aus den zuvor genannten Beispielen wird deutlich, daß mit Hilfe der Erfindung auf der einen Seite für den Fahrer das Ausschalten der Geschwindigkeitsregeleinrichtung und der seiner Bremspedalbetätigung entsprechende Bremsdruckaufbau transparent ist und daß auf der anderen Seite ein komfortables Angleichen des durch die Geschwindigkeitsregeleinrichtung anfangs vorgegebenen Bremsdrucks ($P_A$) an das fahrergewünschte Bremsdruckniveau ($P_F$) erzielt wird.

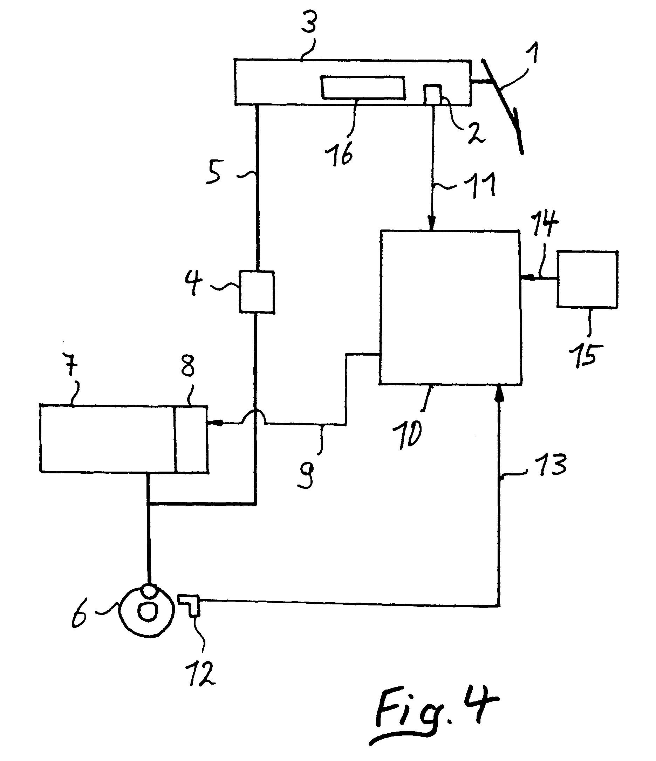

In der Fig. 4 sind schematisch mögliche Komponenten der erfindungsgemäßen Vorrichtung für eine Braky-by-wire-Bremsanlage dargestellt. Ein Bremspedal 1 mit mindestens einem Wegsensor 2 zur Erfassung der Pedalstellung ist mit einem Hauptbremszylinder 3 verbunden. Der Hauptbremszylinder 3 ist über eine mittels eines Ventils 4 absperrbare hydraulische Leitung 5 mit der Radbremse 6 des Fahrzeugs verbunden. Das stromlos offene Ventil 4 ist bei einer normalen Betriebsbremsfunktion geschlossen und mit Hilfe einer Fremdenergiequelle 8 mit einem hydraulischen Regelkreis 7, insbesondere eine Motor-Pumpen-Speichereinheit 8 und elektromagetische Ventile 7, wird der benötigte Bremsdruck erzeugt und geregelt. Die Motor-Pumpen-Speichereinheit 8 und die elektromagetischen Ventile 7 werden über eine Leitung 9 durch entsprechende Signale einer Steuereinheit 10 gesteuert. Ein mit Hilfe des mindestens einen Sensors 2 erfaßtes Signal für die Bremsdruckanforderung des Fahrers wird über eine Leitung 11 .der Steuereinheit 10 zugeführt. Die Steuereinheit 10 steht über eine Leitung 14 in Verbindung mit einer Geschwindigkeitsregeleinheit 15, durch die im eingeschalteten Zustand eine vorgegebene Fahrzeuggeschwindigkeit mittels eines automatischen Bremseneingriffs über die Ansteuerung der steuerbaren Bremssystemkomponenten 7,8 einstellbar ist. Zur Erzeugung eines für den Fahrer "gewohnten" Pedalgefühls ist dem Bremspedal 1 ferner ein Pedalwegsimular 16 zugeordnet. Ferner wird der Steuereinheit 10 über eine Leitung 13 das Signal für das mit einem Raddrehzahlsensor 12 erfaßte Raddrehverhalten zugeführt. Mit Hilfe des Raddrehzahlsensor 12 kann beispielsweise die aktuelle Eigengeschwindigkeit des Fahrzeugs sowie dessen Beschleunigung oder Verzögerung erfaßt werden. Nach Maßgabe der der Steuereinheit 10 zugeführten Signale wird entsprechend des erfindungsgemäßen Verfahrens die aktuellen Verzögerung des Fahrzeugs erfaßt, als Regelgröße ausgewertet und das Fahrzeug nach einer vorgegebenen Funktion nach Maßgabe der Regelgröße abgebremst, wobei vorzugsweise ein resultierender Bremsdruck ($P_{res}$) in der Radbremse 6 des Fahrzeugs eingestellt wird, der durch die Formel $P_{res} = P_F + P_X - (P_F * P_X /$ Konstante Z) ermittelt wird. Nur in einem Notfall wird über den Hauptbremszylinder 3, das stromlos offene Ventil 4 und Leitung 5 die Radbremse 6 mit Bremsdruck beaufschlagt. Dieser sog. hydraulischer Durchgriff gewährleistet eine Hilfsbremsfunktion bei dem diesem elektronisch geregeltem Brake-by-wire-Bremssystem. Ergänzend wird für eine mögliche detailierte Anordnung der hydraulischen Komponenten des Brake-by-wire-Bremssystems und für deren Funktionsweise auf die DE 197 18 533 A1 hingewiesen.

**Patentansprüche**

1. Verfahren zur Regelung einer Bremsanlage für Kraftfahrzeuge mit einer Fahrzeuggeschwindigkeitsregeleinheit, durch die eine vorgegebene Fahrzeuggeschwindigkeit mittels eines automatischen Eingriffs in die Bremsregelung einstellbar ist, wobei bei einer Bremsanforderung der Fahrzeuggeschwindigkeitsregeleinheit und gleichzeitig einer Bremsanforderung des Fahrers die Funktion der Fahrzeuggeschwindigkeitsregeleinheit deaktiviert wird,
**dadurch gekennzeichnet, daß** der auf Grund der Bremsanforderung der Fahrzeuggeschwindigkeitsregeleinheit in der Radbremse eingesteuerte Druck ($P_A$) bei der Bremsanforderung des Fahrers nach einer vorgegebenen Funktion reduziert wird ($P_X$).

2. Verfahren nach Anspruch 1,
**dadurch gekennzeichnet, daß** als Funktion eine zumindest annähernd lineare Rampenfunktion vorgegeben wird.

3. Verfahren nach Anspruch 1 oder 2,
**dadurch gekennzeichnet, daß** die vorgegebene Funktion eine mittlere (negative) Steigung ($m_{PX}$) von (20 bar / 5 sec.) bis (30 bar / 0,5 sec.), vorzugsweise von (20 bar / 2 sec.) bis (30 bar / 1 sec.), aufweist.

4. Verfahren nach einem der Ansprüche 1 bis 3,
**dadurch gekennzeichnet, daß** die Funktion nach Maßgabe der Bremsanforderung des Fahrers verändert wird.

5.   Verfahren nach Anspruch 4,
**dadurch gekennzeichnet, daß** bei einer Anforderung des Fahrers für ein schnelles Abbremsen des Fahrzeugs eine Funktion vorgegeben wird, durch welche der auf Grund der Bremsanforderung der Fahrzeuggeschwindigkeitsregeleinheit in der Radbremse eingesteuerte Druck ($P_A$) schnell reduziert wird und daß bei einer Anforderung des Fahrers für ein langsames Abbremsen des Fahrzeugs eine Funktion vorgegeben wird, durch welche der auf Grund der Bremsanforderung der Fahrzeuggeschwindigkeitsregeleinheit in der Radbremse eingesteuerte Druck ($P_A$) langsam reduziert wird.

6.   Verfahren nach Anspruch 5,
**dadurch gekennzeichnet, daß** aus der Bremsanforderung des Fahrers einer mittlere (positive) Steigung ($m_{PF}$) des Bremsdrucks ermittelt wird und daraus die mittlere (negative) Steigung ($m_{PX}$) der vorgegebenen Funktion durch die Formel

$$m_{PX} = -m_{PF} * \text{Konstante K}$$

bestimmt wird, bis zu einem oberen Grenzwert von (100 bar / sec.), wobei die Konstante K vorzugsweise einen Wert in einem Bereich von 1 bis 2 hat.

7.   Verfahren nach einem der Ansprüche 1 bis 6,
**dadurch gekennzeichnet, daß** ein resultierender Bremsdruck ($P_{res}$) in der Radbremse des Fahrzeugs nach Maßgabe des auf Grund der Bremsanforderung des Fahrers in der Radbremse eingesteuerten Drucks ($P_F$) und des durch die vorgegebene Funktion in der Radbremse eingesteuerten Drucks ($P_X$) eingestellt wird.

8.   Verfahren nach Anspruch 7,
**dadurch gekennzeichnet, daß** ein resultierender Bremsdruck ($P_{res}$) in der Radbremse des Fahrzeugs eingestellt wird, welcher der Summe aus einem auf Grund der Bremsanforderung des Fahrers in der Radbremse eingesteuerten Druck ($P_F$) und dem durch die vorgegebene Funktion in der Radbremse eingesteuerten Druck ($P_X$) entspricht.

9.   Verfahren nach Anspruch 7,
**dadurch gekennzeichnet, daß** ein resultierender Bremsdruck ($P_{res}$) in der Radbremse des Fahrzeugs eingestellt wird, welcher dem größeren der beiden auf Grund der Bremsanforderung des Fahrers in der Radbremse eingesteuerten Druck ($P_F$) und durch die vorgegebene Funktion in der Radbremse eingesteuerten Druck ($P_X$) entspricht.

10.   Verfahren nach Anspruch 7,
**dadurch gekennzeichnet, daß** ein resultierender Bremsdruck ($P_{res}$) in der Radbremse des Fahrzeugs eingestellt wird, der einem Wert entspricht, der geringer ist als die Summe aus dem auf Grund der Bremsanforderung des Fahrers in der Radbremse eingesteuerten Druck ($P_F$) und dem durch die vorgegebene Funktion in der Radbremse eingesteuerten Druck ($P_X$) und der größer ist als der größere der beiden auf Grund der Bremsanforderung des Fahrers in der Radbremse eingesteuerten Druck ($P_F$) und durch die vorgegebene Funktion in der Radbremse eingesteuerten Druck ($P_X$).

11.   Verfahren nach Anspruch 10,
**dadurch gekennzeichnet, daß** ein resultierender Bremsdruck ($P_{res}$) in der Radbremse des Fahrzeugs eingestellt wird, der einem Wert entspricht, welcher durch die Formel

$$P_{res} = P_F + P_X - (P_F * P_X / \text{Konstante Z})$$

ermittelt wird.

12.   Verfahren nach Anspruch 11,
**dadurch gekennzeichnet, daß** die Konstante Z einen Wert in einem Bereich von 20 bar bis 100 bar, vorzugsweise 30 bar bis 70 bar, hat.

13.   Verfahren nach einem der Ansprüche 1 bis 12,
**dadurch gekennzeichnet, daß** der Bremsdruck in der Radbremse durch Fremdenergie, insbesondere durch einen hydraulischen Speicher und ein Motor-Pumpen-Aggregat, erzeugt wird.

14.   Verfahren nach Anspruch 13,
**dadurch gekennzeichnet, daß** die Bremsdruckanforderung des Fahrers mit Hilfe eines Pedalwegsimulators und zugeordneten Sensoren erfaßt wird und elektronisch einer Bremsregeleinheit übermittelt wird.

15.   Vorrichtung zur Regelung einer Bremsanlage für Kraftfahrzeuge mit einer Fahrzeuggeschwindigkeitsregeleinheit, die Mittel aufweist, um die eine vorgegebene Fahrzeuggeschwindigkeit mittels eines automatischen Eingriffs in die Bremsregelung einzustellen und die Mittel aufweist, um bei einer Bremsanforderung der Fahrzeuggeschwindigkeitsregeleinheit und gleichzeitig einer Bremsanforderung des Fahrers die Funktion der Fahrzeuggeschwindigkeitsregeleinheit zu deaktivieren,
**dadurch gekennzeichnet, daß** diese Vorrichtung Mittel aufweist,die den auf Grund der Bremsanforderung der Fahrzeuggeschwindigkeitsregeleinheit in der Radbremse eingesteuerten Druck ($P_A$) bei der Bremsanforderung des Fahrers nach einer vorgegebenen Funktion reduzieren ($P_X$) und daß diese Vorrichtung Mittel aufweist, um insbesondere einen resultierenden Bremsdruck ($P_{res}$) in der Radbremse des Fahrzeugs einzustellen, der durch die Formel $P_{res} = P_F + P_X - (P_F * P_X / \text{Konstante Z})$ ermittelt wird.

16. Fremdkraftbetätigte, vorzugsweise elektronisch regelbare Fahrzeugbremse, insbesondere Brake-by-wire-Fahrzeugbremse,
    **gekennzeichnet durch** eine Vorrichtung zur Regelung der Fahrzeugbremsanlage nach Anspruch 15.

## Claims

1. Method for controlling a brake system for automotive vehicles including a vehicle speed control unit that permits the adjustment of a predetermined vehicle speed by way of an automatic intervention into brake control, wherein upon a braking request of the vehicle speed control unit and, simultaneously, a braking request of the driver the function of the vehicle speed control unit is deactivated,
   **characterized in that** the pressure ($P_A$) introduced into the wheel brake due to the braking request of the vehicle speed control unit is reduced according to a predetermined function ($P_X$) upon the braking request of the driver.

2. Method as claimed in claim 1,
   **characterized in that** an at least approximately linear ramp function is predetermined as the function.

3. Method as claimed in claim 1 or claim 2,
   **characterized in that** the predetermined function has a mean (negative) gradient ($m_{PX}$) of (20 bar / 5 sec) to (30 bar / 0.5 sec), preferably of (20 bar / 2 sec) to (30 bar / 1 sec).

4. Method as claimed in any one of claims 1 to 3,
   **characterized in that** the function is changed in accordance with the braking request of the driver.

5. Method as claimed in claim 4,
   **characterized in that** upon a request of the driver for quick braking of the vehicle a function is predetermined causing quick reduction of the pressure ($P_A$) introduced into the wheel brake due to the braking request of the vehicle speed control unit, and **in that** upon a request of the driver for slow braking of the vehicle a function is predetermined causing slow reduction of the pressure ($P_A$) introduced into the wheel brake due to the braking request of the vehicle speed control unit.

6. Method as claimed in claim 5,
   **characterized in that** a mean (positive) gradient

($m_{PF}$) of the brake pressure is determined from the braking request of the driver, and therefrom the mean (negative) gradient ($m_{PX}$) of the predetermined function is defined by the formula

$$m_{PX} = -m_{PF} * \text{constant K},$$

until a top limit value of (100 bar / sec), wherein the constant K has preferably a value ranging from 1 to 2.

7. Method as claimed in any one of claims 1 to 6,
   **characterized in that** a resulting brake pressure ($P_{res}$) in the wheel brake of the vehicle is adjusted in accordance with the pressure ($P_F$) introduced into the wheel brake due to the braking request of the driver and the pressure ($P_X$) introduced into the wheel brake due to the predetermined function.

8. Method as claimed in claim 7,
   **characterized in that** a resulting brake pressure ($P_{res}$) is adjusted in the wheel brake of the vehicle which corresponds to the sum of a pressure ($P_F$) introduced into the wheel brake due to the braking request of the driver and the pressure (Px) introduced into the wheel brake by way of the predetermined function.

9. Method as claimed in claim 7,
   **characterized in that** a resulting brake pressure ($P_{res}$) is adjusted in the wheel brake of the vehicle which corresponds to the higher of the two pressures, i.e., the pressure ($P_F$) introduced into the wheel brake due to the braking request of the driver or the pressure (Px) introduced into the wheel brake by way of the predetermined function.

10. Method as claimed in claim 7,
    **characterized in that** a resulting brake pressure ($P_{res}$) is adjusted in the wheel brake of the vehicle which corresponds to a value that is lower than the sum of the pressure ($P_F$) introduced into the wheel brake due to the braking request of the driver and the pressure ($P_X$) introduced into the wheel brake by way of the predetermined function, and which is higher than the higher one of the two pressures, i.e., the pressure ($P_F$) introduced into the wheel brake due to the braking request of the driver or the pressure ($P_X$) introduced into the wheel brake by way of the predetermined function.

11. Method as claimed in claim 10,
    **characterized in that** a resulting brake pressure ($P_{res}$) is adjusted in the wheel brake of the vehicle which corresponds to a value that is determined by the formula

$$P_{res} = P_F + P_X - (P_F * P_X) / \text{constant } Z.$$

**12.** Method as claimed in claim 11, **characterized in that** the constant Z has a value in the range of 20 bar to 100 bar, preferably 30 bar to 70 bar.

**13.** Method as claimed in any one of claims 1 to 12, **characterized in that** the brake pressure in the wheel brake is generated by independent energy, in particular, by way of a hydraulic accumulator and a motor-and-pump assembly.

**14.** Method as claimed in claim 13, **characterized in that** the brake pressure request of the driver is sensed by means of a pedal travel simulator and associated sensors and transmitted electronically to a brake control unit.

**15.** Device for controlling a brake system for automotive vehicles with a vehicle speed control unit which includes means to adjust a predetermined vehicle speed by means of an automatic intervention into the brake control, and which includes means to deactivate the function of the vehicle speed control unit in the event of a braking request of the vehicle speed control unit and, simultaneously, a braking request of the driver, **characterized in that** the device includes means reducing the pressure ($P_A$) introduced into the wheel brake due to the braking request of the vehicle speed control unit according to a predetermined function ($P_X$) in the event of the braking request of the driver, and **in that** this device includes means to adjust in particular a resulting brake pressure ($P_{res}$) in the wheel brake of the vehicle that is determined by the formula $P_{res} = P_F + P_X - (P_F * P_X / \text{constant } Z)$.

**16.** Vehicle brake that is actuated by independent force and preferably electronically controllable, especially brake-by-wire vehicle brake, **characterized by** a device for controlling the vehicle brake system as claimed in claim 15.

## Revendications

**1.** Procédé de régulation d'un système de freinage de véhicule automobile comportant une unité de régulation de la vitesse du véhicule par laquelle une vitesse prédéfinie du véhicule peut être réglée au moyen d'une intervention automatique dans la régulation du freinage, la fonction de l'unité de régulation de la vitesse du véhicule étant désactivée en cas de demande de freinage de l'unité de régulation de la vitesse du véhicule et en même temps d'une demande de freinage du conducteur, **caractérisé en ce que** la pression ($P_A$) introduite dans le frein des roues sur la base de la demande de freinage de l'unité de régulation de la vitesse du véhicule, est réduite ($P_X$), selon une fonction prédéfinie lors de la demande de freinage du conducteur.

**2.** Procédé selon la revendication 1, **caractérisé en ce qu'**une fonction de rampe au moins approximativement linéaire est prédéfinie comme fonction.

**3.** Procédé selon la revendication 1 ou 2, **caractérisé en ce que** la fonction prédéfinie présente une pente (négative) moyenne ($m_{PX}$) de 20 bars/5 secondes à 30 bars/0,5 seconde, de préférence de 20 bars/2 secondes à 30 bars/1 seconde.

**4.** Procédé selon l'une des revendications 1 à 3, **caractérisé en ce que** la fonction est modifiée suivant la demande de freinage de la part du conducteur.

**5.** Procédé selon la revendication 4, **caractérisé en ce qu'**en cas de demande du conducteur d'un freinage rapide du véhicule, une fonction est prédéfinie par laquelle la pression ($P_A$) introduite dans le frein des roues, sur la base de la demande de freinage de l'unité de régulation de la vitesse du véhicule, est réduite rapidement, et **en ce que** dans le cas d'une demande du conducteur d'un freinage lent du véhicule, une fonction est prédéfinie par laquelle la pression ($P_A$), introduite dans le frein des roues, sur la base de la demande de freinage de l'unité de régulation de la vitesse du véhicule, est réduite lentement.

**6.** Procédé selon la revendication 5, **caractérisé en ce qu'**à partir de la demande de freinage du conducteur une pente (positive) moyenne ($m_{PF}$) de la pression de freinage est déterminée et, à partir de celle-ci, la pente (négative) moyenne ($m_{PX}$) de la fonction prédéfinie est déterminée par la formule

$$m_{PX} = - m_{PF} * \text{constante } K,$$

jusqu'à une valeur limite supérieure de 100 bars/ seconde, la constante K ayant de préférence une valeur comprise entre 1 et 2.

**7.** Procédé selon l'une des revendications 1 à 6, **caractérisé en ce qu'**une pression de freinage résultante ($P_{res}$) est réglée dans le frein des roues du véhicule suivant la pression ($P_F$) introduite dans le frein des roues sur la base de la demande de freinage du conducteur, et de la pression ($P_X$) introduite dans le frein des roues par la fonction prédéfinie.

**8.** Procédé selon la revendication 7, **caractérisé en**

ce qu'une pression de freinage résultante (P<sub>res</sub>) est réglée dans le frein des roues du véhicule laquelle correspond à la somme d'une pression (P<sub>F</sub>) introduite dans le frein des roues sur la base de la demande de freinage du conducteur et de la pression (P<sub>X</sub>) introduite dans le frein des roues par la fonction prédéfinie.

9. Procédé selon la revendication 7, **caractérisé en ce qu'**une pression de freinage résultante (P<sub>res</sub>) est réglée dans le frein des roues du véhicule, laquelle correspond à la plus grande des deux pressions, la pression (P<sub>F</sub>) introduite dans le frein des roues sur la base de la demande de freinage du conducteur et la pression (P<sub>X</sub>) introduite dans le frein des roues par la fonction prédéfinie.

10. Procédé selon la revendication 7, **caractérisé en ce qu'**une pression de freinage résultante (P<sub>res</sub>) est réglée dans le frein des roues du véhicule, laquelle correspond à une valeur qui est inférieure à la somme de la pression (P<sub>F</sub>) introduite dans le frein des roues sur la base de la demande de freinage du conducteur et de la pression (P<sub>X</sub>) introduite dans le frein des roues par la fonction prédéfinie, et qui est supérieure à la plus grande des deux pressions, la pression (P<sub>F</sub>) introduite dans le frein des roues sur la base de la demande de freinage du conducteur, et la pression (P<sub>X</sub>) introduite dans le frein des roues par la fonction prédéfinie.

11. Procédé selon la revendication 10, **caractérisé en ce qu'**une pression de freinage résultante (P<sub>res</sub>) est réglée dans le frein des roues du véhicule, laquelle correspond à une valeur qui est déterminée par la formule

$$P_{res} = P_F + P_X - (P_F * P_X / \text{constante } Z).$$

12. Procédé selon la revendication 11, **caractérisé en ce que** la constante Z a une valeur comprise entre 20 bars et 100 bars, de préférence entre 30 bars et 70 bars.

13. Procédé selon l'une des revendications 1 à 12, **caractérisé en ce que** la pression de freinage dans le frein des roues est produite par une énergie externe, en particulier par un accumulateur hydraulique et un groupe motopompe.

14. Procédé selon la revendication 13, **caractérisé en ce que** la demande de pression de freinage du conducteur est détectée à l'aide d'un simulateur de course de pédale et de capteurs associés, et est transmise de manière électronique à une unité de régulation du freinage.

15. Dispositif de régulation d'un système de freinage de véhicule automobile avec une unité de régulation de la vitesse du véhicule qui comporte des moyens pour régler une vitesse prédéfinie du véhicule au moyen d'une intervention automatique dans la régulation du freinage et qui comporte des moyens pour désactiver la fonction de l'unité de régulation de la vitesse du véhicule dans le cas d'une demande de freinage de l'unité de régulation de la vitesse du véhicule et en même temps d'une demande de freinage du conducteur, **caractérisé en ce que** ce dispositif comporte des moyens qui réduisent (P<sub>X</sub>) la pression (P<sub>A</sub>) introduite dans le frein des roues sur la base de la demande de freinage de l'unité de régulation de la vitesse du véhicule en cas de demande de freinage du conducteur, suivant une fonction prédéfinie, et **en ce que** ce dispositif comporte des moyens pour régler en particulier une pression de freinage résultante (P<sub>res</sub>) dans le frein des roues du véhicule, laquelle est déterminée par la formule P<sub>res</sub> = P<sub>F</sub> + P<sub>X</sub> - (P<sub>F</sub> * P<sub>X</sub> / constante Z).

16. Frein de véhicule à régulation de préférence électronique, actionné par une force externe, en particulier frein de véhicule brake-by-wire, **caractérisé par** un dispositif de régulation du système de freinage du véhicule selon la revendication 15.

Fig. 1

Fig. 2

EP 1 212 225 B1

Fig. 3

EP 1 212 225 B1

Fig. 4